# EUROPÄISCHE PATENTSCHRIFT

(11) **EP 3 274 197 B1**
(45) Veröffentlichungstag und Bekanntmachung des Hinweises auf die Patenterteilung: **13.03.2019**
(21) Anmeldenummer: 16705724.9
(22) Anmeldetag: 26.01.2016
(51) Int. Cl.: B60G 15/06, B60G 17/02, B60G 11/52, F16F 9/54

(54) **FEDERBEINSTÜTZLAGERANORDNUNG FÜR EIN KRAFTFAHRZEUG**
SUSPENSION STRUT BEARING ASSEMBLY FOR A MOTOR VEHICLE
DISPOSITIF DE PALIER SUPPORT DE JAMBE DE FORCE POUR UN VÉHICULE AUTOMOBILE

(30) Priorität: 23.03.2015 DE 102015003824; 07.07.2015 DE 102015212640
(43) Veröffentlichungstag der Anmeldung: 31.01.2018
(73) Patentinhaber: Schaeffler Technologies AG & Co. KG, 91074 Herzogenaurach (DE)
(72) Erfinder: BÄUML, Markus, 91058 Erlangen (DE); FABER, Daniel, 90559 Burgthann (DE); KREHMER, Hartmut, 91052 Erlangen (DE); WÜBBOLT-GORBATENKO, Benjamin, 91054 Erlangen (DE); KRAUS, Markus, 90574 Roßtal (DE); BAUER, Jürgen, 91336 Heroldsbach (DE)
(86) Internationale Anmeldenummer: PCT/DE2016/200038
(87) Internationale Veröffentlichungsnummer: WO 2016/150438

(56) Entgegenhaltungen:
- EP-A2- 2 236 324
- WO-A1-2010/089581
- DE-A1- 10 237 809
- DE-U1- 29 923 896
- US-A- 4 458 605
- US-A1- 2008 303 235

## Beschreibung

Die Erfindung betrifft eine Federbeinstützlageranordnung für ein Kraftfahrzeug, umfassend ein verstellbares Domlager mit einem Elastomerring, wobei das verstellbare Domlager zum einen axial über ein Federbeinstützlager an einer Fahrwerksfeder eines Federbeins angeordnet ist, und zum anderen über einen Grundring zumindest mittelbar an einer Karosserie des Kraftfahrzeugs zur Anlage kommt, um das Federbein dämpfend mit der Karosserie zu verbinden.

### Gebiet der Erfindung

Das Einsatzgebiet der Erfindung erstreckt sich vornehmlich auf die Kraftfahrzeugtechnik. Zur Federung des Kraftfahrzeugs werden an der Vorderachse und teilweise an der Hinterachse des Fahrzeugs Federbeine angeordnet. Ein Federbein besteht in der Regel aus einer die Federung übernehmende Fahrwerksfeder sowie Zusatzteilen zur Befestigung und Lagerung der Fahrwerksfeder an der Fahrzeugkarosserie. Des Weiteren umfasst das Federbein auch eine Dämpfereinheit. Das Federbein wird mit dem oberen Ende an der Karosserie des Fahrzeugs befestigt und überträgt hierdurch die Bewegungen des Fahrwerks gedämpft auf die Fahrzeugkarosserie. Das zur Karosserie gerichtete Ende der Fahrwerksfeder wird üblicherweise durch einen Federteller und vorzugsweise mit einem Federbeinlager abgeschlossen, über welche wiederum ein Domlager eingreifen kann.

Serienmäßige Domlager sind üblicherweise auf Fahrkomfort ausgelegt. Sie bestehen meist aus einem inneren und einem äußeren Metallteil, welche über ein Elastomer miteinander verbunden sind. Diese Bauweise ermöglicht ein komfortables Fahrverhalten, da das Domlager mitfedert und Stöße aufnimmt. Allerdings ist diese beschriebene Verbindung auf eine komfortable oder auf eine dynamische Fahrweise auszulegen, wobei eine komfortable Auslegung für eine dynamische Fahrweise unvorteilhaft ist und umgekehrt.

Beispielsweise geht ein zuvor beschriebenes Domlager aus der DE 299 23 896 U1 hervor. Nachteilig an dem zuvor genannten Stand der Technik ist, dass eine bei der Herstellung eingestellte Steifigkeit während des Betriebs des Kraftfahrzeugs nicht einstellbar ist. Somit ist die Steifigkeit des Domlagers nicht mehr verstellbar.

### Aufgabenstellung

Die Aufgabe der Erfindung besteht darin, eine Federbeinstützlageranordnung für ein Kraftfahrzeug weiterzuentwickeln und dadurch insbesondere den Komfort für die Fahrzeuginsassen sowie die Fahrdynamik des Kraftfahrzeugs zu erhöhen.

### Erfindungsgemäße Lösung

Erfindungsgemäß weist der Grundring zumindest zwei axiale Aussparungen zur Führung eines jeweiligen Stempels auf, wobei die mindestens zwei Stempel zur Steifigkeitsänderung des Domlagers axial zwischen dem Elastomerring und einem Stellring zur Anlage kommen. Mit anderen Worten umfasst das Domlager mindestens zwei Stempel, den Stellring, den Grundring und den Elastomerring. Die mindestens zwei Stempel sind ebenso wie der Grundring axial zwischen dem Stellring und dem Elastomerring angeordnet. Ferner sind die mindestens zwei Stempel gleichmäßig über den Umfang zueinander beabstandet und am Grundring geführt. Dazu weist der Grundring einen axial verlaufenden Abschnitt auf, der an einer Mantelfläche des Stempels zur Anlage kommt. Insbesondere weist das Domlager vier Stempel auf, wobei jeder Stempel einen im Wesentlichen vertikal ausgebildeten Abschnitt sowie einen im Wesentlichen horizontal dazu ausgebildeten Abschnitt aufweist. Der im Wesentlichen vertikal ausgebildete Abschnitt kommt axial am Elastomerring und radial am Grundring zur Anlage. Demgegenüber kommt der im Wesentlichen horizontal ausgebildete Abschnitt axial zwischen dem Stellring und dem Grundring zur Anlage.

Vorzugsweise ist der Stellring zur Steifigkeitsänderung des Domlagers zumindest mittelbar über einen damit zusammenwirkenden Aktuator verdrehbar. Somit wird durch eine Verdrehung des Stellrings eine Steifigkeitsänderung des Domlagers bewirkt. Insbesondere beträgt die Verdrehung des Stellrings weniger als 90°.

Vorteilhafterweise ist der Aktuator über ein damit zusammenwirkendes Steuerelement steuerbar und regelbar. Das Steuerelement ist dabei entweder fahrsituationsabhängig und somit automatisch oder fahrerwunschabhängig und somit manuell steuerbar.

Bei der fahrsituationsabhängigen Steuerung werden je nach Fahrsituation Signale an das Steuerelement übermittelt und dementsprechend die Steifigkeit des Domlagers eingestellt. Bei der fahrerwunschabhängigen Steuerung kann der Fahrer des Kraftfahrzeugs über einen jeweiligen Schalter zwischen unterschiedlichen Steifigkeitsstufen des Domlagers variieren und dadurch die jeweilige Fahrweise des Kraftfahrzeugs, z. B. sportlich oder komfortabel, unterstützen.

Ferner bevorzugt wirkt der Aktuator über eine Getriebevorrichtung mit dem Stellring zusammen. Insbesondere ist der Stellring radial verzahnt, wobei ein Getriebeelement, vorzugsweise ein Zahnrad des Getriebes in die Verzahnung des Stellrings greift und darüber den Stellring antreibt, sodass dieser eine Drehung erfährt.

Des Weiteren bevorzugt weisen die mindestens zwei Stempel stirnseitig zum Stellring hin eine jeweilige Rampenkontur auf, die bei einer Verdrehung des Stellrings mit einer jeweiligen korrespondierend dazu ausgebildeten Rampenkontur am Stellring zusammenwirken. Die jeweiligen korrespondierend zueinander ausgebildeten Rampenkonturen ermöglichen eine axiale Expansion des Domlagers bei einer Verdrehung des Stellrings zur Erhöhung der Steifigkeit des Domlagers. Mit anderen Worten wird der Stellring auf den mindestens zwei Stempeln axial aufgebockt, wobei sich die mindestens zwei Stempel auf dem Elastomerring abstützen.

Ferner bevorzugt ist eine Kolbenstange des Federbeins mit dem Grundring verbunden. Insbesondere ist die Kolbenstange über jeweilige Schraubmittel lösbar mit dem Grundring verschraubt. Ferner durchdringt die Kolbenstange mittig das Domlager, wobei die mindestens zwei Stempel konzentrisch zur Kolbenstange angeordnet sind.

Die Erfindung schließt die technische Lehre ein, dass der Stellring axial an der Karosserie drehbar gelagert ist. Insbesondere ist der Stellring über ein Axiallager an der Karosserie drehbar gelagert. Vorteilhafterweise ist das Axiallager als Nadelkranz oder Gleitlager ausgebildet.

Vorzugsweise weist der Elastomerring mindestens zwei niedrige Axialbereiche sowie mindestens zwei hohe Axialbereiche auf, wobei die mindestens zwei niedrigen Axialbereiche dazu vorgesehen sind zumindest den jeweiligen Stempel aufzunehmen, und wobei die mindestens zwei hohen Axialbereiche dazu vorgesehen sind axial zwischen dem Grundring und dem Federbeinstützlager zur Anlage zu kommen. Mithin kommen die mindestens zwei Stempel stirnseitig an einem relativ dünnwandigen Bereich, nämlich an den mindestens zwei niedrigen Axialbereichen des Elastomerrings zur Anlage. Demgegenüber kommt der Grundring an einem relativ dickwandigen Bereich, nämlich an den mindestens zwei hohen Axialbereichen des Elastomerrings zur Anlage. Der relativ dickwandige Bereich des Elastomerrings weist mindestens doppelt so viel Elastomermaterial in Axialrichtung als der relativ dünnwandige Bereich auf. Somit besitzt der relativ dickwandige Bereich des Elastomerrings ein höheres Dämpfungsvermögen. Des Weiteren ist die Auflagefläche des Grundrings am Elastomerring größer als die Auflagefläche des Stempels am Elastomerring.

Gemäß einem bevorzugten Ausführungsbeispiel koppeln die mindestens zwei Stempel zur Erhöhung der Steifigkeit des Domlagers den Stellring mit dem Elastomerring. Durch die Koppelung des Stellrings mit dem Elastomerring über die mindestens zwei Stempel verläuft der Kraftpfad über die mindestens zwei Stempel. Das Dämpfungsvermögen ist relativ gering, sodass die Steifigkeit des Domlagers erhöht wird. Eine dynamische Fahrweise wird dadurch unterstützt.

Gemäß einem weiteren bevorzugten Ausführungsbeispiel sind die mindestens zwei Stempel zur Senkung der Steifigkeit des Domlagers zumindest teilweise in einer jeweiligen dafür vorgesehenen Aussparung am Stellring angeordnet. Die Anordnung der mindestens zwei Stempel in einer jeweiligen dafür vorgesehenen Aussparung am Stellring entlastet die mindestens zwei Stempel, sodass der Stellring axial über den Grundring am Elastomerring zur Anlage kommt. Die mindestens zwei Stempel befinden sich nicht im Kraftpfad. Dadurch wird das Dämpfungsvermögen erhöht, sodass die Steifigkeit des Domlagers herabgesetzt wird. Eine komfortable Fahrweise wird dadurch unterstützt.

### Kurzbeschreibung der Zeichnung

Weitere die Erfindung verbessernde Maßnahmen werden nachstehend gemeinsam mit der Beschreibung eines Ausführungsbeispiels der Erfindung anhand der Figuren näher dargestellt. Es zeigen
- Figur 1: eine vereinfachte schematische Darstellung einer erfindungsgemäßen Federbeinstützlageranordnung, umfassend ein erfindungsgemäßes Domlager,
- Figur 2: eine schematische Schnittdarstellung des erfindungsgemäßen Domlagers gemäß Figur 1, wobei das Domlager eine hohe Steifigkeit aufweist, und
- Figur 3: eine schematische Schnittdarstellung des erfindungsgemäßen Domlagers gemäß Figur 1, wobei das Domlager eine geringe Steifigkeit aufweist.

### Ausführliche Beschreibung der Zeichnung

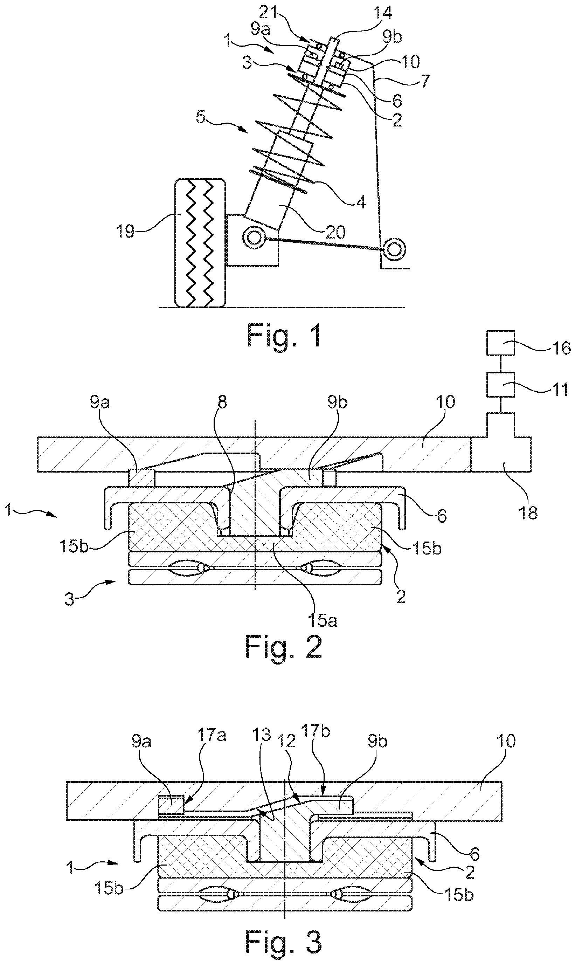

Gemäß Figur 1 ist im Bereich einer Radaufhängung eines - hier nicht dargestellten - Kraftfahrzeuges zwischen einem Rad 19 und einer Karosserie 7 ein Federbein 5 angeordnet. Das Federbein 5 weist einen Dämpfer 20 mit einer Kolbenstange 14 sowie einer Fahrwerksfeder 4 auf. Seitens der Karosserie 7 stützt sich das Federbein 5 über ein Federbeinstützlager 3 an einem verstellbaren Domlager 1 dämpfend ab. Das verstellbare Domlager 1 umfasst einen Grundring 6, einen Stellring 10, einen Elastomerring 2 sowie mehrere Stempel 9a, 9b, von denen jedoch nur zwei abgebildet sind. Die Kolbenstange 14 des Federbeins 5 ist mit dem Grundring 6 verbunden. Ferner ist der Stellring 10 über ein Lagerelement 21 axial an der Karosserie 7 drehbar gelagert.

Nach Figur 2 weist der Grundring 6 zur Führung eines jeweiligen Stempels 9a, 9b eine jeweilige axiale Aussparung 8 auf, wobei aufgrund der Schnittdarstellung jedoch nur eine axiale Aussparung 8 abgebildet ist. Zur Steifigkeitsänderung des Domlagers 1 wirkt der Stellring 10 über eine Getriebevorrichtung 18 mit dem Aktuator 11 zusammen. Dabei treibt der Aktuator 11 die Getriebevorrichtung 18 an, wobei die Getriebevorrichtung 18 radial mit dem Stellring 10 verbunden ist, um diesen zu drehen und dadurch die Steifigkeit des verstellbaren Domlagers 1 zu verändern. Ferner ist der Aktuator 11 über ein damit zusammenwirkendes Steuerelement 16 steuerbar.

In der in Figur 2 dargestellten Position des Stellrings 10 weist das verstellbare Domlager 1 eine hohe Steifigkeit auf. Die Stempel 9a, 9b stützen sich nämlich axial an dem Elastomerring 2 ab, wobei sich der Stellring 10 seinerseits axial an den Stempeln 9a, 9b abstützt. Der Elastomerring 2 weist zur Aufnahme eines jeweiligen Stempels 9a, 9b einen niedrigen Axialbereich 15a auf. Ferner weist der Elastomerring 2 zwischen zwei niedrigen Axialbereichen 15a einen jeweiligen hohen Axialbereich 15b auf, wobei die hohen Axialbereiche 15b dazu vorgesehen sind axial zwischen dem Grundring 6 und dem Federbeinstützlager 3 zur Anlage zu kommen. Die niedrigen Axialbereiche 15a weisen ein geringeres Elastomermaterialvolumen auf als die hohen Axialbereiche 15b. Mithin ist das Dämpfungsvermögen der niedrigen Axialbereiche 15a geringer als das Dämpfungsvermögen der hohen Axialbereiche 15b. Da der Kraftpfad in der dargestellten Position der Stempel 9a, 9b über die geringen Axialbereiche 15a und den jeweiligen damit zusammenwirkenden Stempeln des Elastomerrings 2 verläuft, weist das verstellbare Domlager 1 eine hohe Steifigkeit auf, die ein sportliches Fahren unterstützt.

In der in Figur 3 dargestellten Position des Stellrings 10 weist das verstellbare Domlager 1 eine geringe Steifigkeit auf. Die Stempel 9a, 9b sind zur Senkung der Steifigkeit des Domlagers 1 teilweise in einer jeweiligen dafür vorgesehenen Aussparung 17a, 17b am Stellring 10 angeordnet. Diese Position haben die Stempel 9a, 9b über eine Verdrehung des Stellrings 10 nach links erreicht. Ferner weisen die Stempel 9a, 9b stirnseitig zum Stellring 10 hin eine jeweilige Rampenkontur 12 auf, die bei der Verdrehung des Stellrings 10 mit einer jeweiligen korrespondierend dazu ausgebildeten Rampenkontur 13 am Stellring 10 zusammenwirken. Dadurch nähert sich der Stellring 10 axial dem Grundring 6 an, bis der Stellring 10 axial am Grundring 6 zur Anlage kommt. Sobald der Stellring 10 axial am Grundring 6 zur Anlage gekommen ist, werden die Stempel 9a, 9b entlastet und die hohen Axialbereiche 15b des Elastomerrings 2 belastet. Mithin werden die hohen Axialbereiche 15b des Elastomerrings 2 durch den Grundring 6 axial gestaucht. Da der Kraftpfad entlang der hohen Axialbereiche 15b des Elastomerrings 2 verläuft, weist das verstellbare Domlager 1 eine geringe Steifigkeit auf, die ein komfortables Fahren unterstützt.

### Bezugszeichenliste

- 1: verstellbares Domlager
- 2: Elastomerring
- 3: Federbeinstützlager
- 4: Fahrwerksfeder
- 5: Federbein
- 6: Grundring
- 7: Karosserie
- 8: Aussparung
- 9a, 9b: Stempel
- 10: Stellring
- 11: Aktuator
- 12: Rampenkontur
- 13: Rampenkontur
- 14: Kolbenstange
- 15a: niedriger Axialbereich
- 15b: hoher Axialbereich
- 16: Steuerelement
- 17a, 17b: Aussparung
- 18: Getriebevorrichtung
- 19: Rad
- 20: Dämpfer
- 21: Lagerelement

## Patentansprüche

1. Federbeinstützlageranordnung für ein Kraftfahrzeug, umfassend ein verstellbares Domlager (1) mit einem Elastomerring (2), wobei das verstellbare Domlager (1) zum einen axial über ein Federbeinstützlager (3) an einer Fahrwerksfeder (4) eines Federbeins (5) angeordnet ist, und zum anderen über einen Grundring (6) zumindest mittelbar an einer Karosserie (7) des Kraftfahrzeugs zur Anlage kommt, um das Federbein (5) dämpfend mit der Karosserie (7) zu verbinden,
**dadurch gekennzeichnet, dass** der Grundring (6) zumindest zwei axiale Aussparungen (8) zur Führung eines jeweiligen Stempels (9a, 9b) aufweist, wobei die mindestens zwei Stempel (9a, 9b) zur Steifigkeitsänderung des Domlagers (1) axial zwischen dem Elastomerring (2) und einem Stellring (10) zur Anlage kommen.

2. Federbeinstützlageranordnung nach Anspruch 1,
**dadurch gekennzeichnet, dass** der Stellring (10) zur Steifigkeitsänderung des Domlagers (1) zumindest mittelbar über einen damit zusammenwirkenden Aktuator (11) verdrehbar ist.

3. Federbeinstützlageranordnung nach Anspruch 1,
**dadurch gekennzeichnet, dass** die mindestens zwei Stempel (9a, 9b) stirnseitig zum Stellring (10) hin eine jeweilige Rampenkontur (12) aufweisen, die bei einer Verdrehung des Stellrings (10) mit einer jeweiligen korrespondierend dazu ausgebildeten Rampenkontur (13) am Stellring (10) zusammenwirken.

4. Federbeinstützlageranordnung nach Anspruch 1,
**dadurch gekennzeichnet, dass** eine Kolbenstange (14) des Federbeins (5) mit dem Grundring (6) verbunden ist.

5. Federbeinstützlageranordnung nach Anspruch 1,
**dadurch gekennzeichnet, dass** der Stellring (10) axial an der Karosserie (7) drehbar gelagert ist.

6. Federbeinstützlageranordnung nach Anspruch 1,
**dadurch gekennzeichnet, dass** der Elastomerring (2) mindestens zwei niedrige Axialbereiche (15a) sowie mindestens zwei hohe Axialbereiche (15b) aufweist, wobei die mindestens zwei niedrigen Axialbereiche (15a) dazu vorgesehen sind zumindest den jeweiligen Stempel (9a, 9b) aufzunehmen, und wobei die mindestens zwei hohen Axialbereiche (15b) dazu vorgesehen sind axial zwischen dem Grundring (6) und dem Federbeinstützlager (3) zur Anlage zu kommen.

7. Federbeinstützlageranordnung nach Anspruch 2,
**dadurch gekennzeichnet, dass** der Aktuator (11) über ein damit zusammenwirkendes Steuerelement (16) steuerbar und regelbar ist.

8. Federbeinstützlageranordnung nach Anspruch 1,
**dadurch gekennzeichnet, dass** der Aktuator (11) über eine Getriebevorrichtung (18) mit dem Stellring (10) zusammenwirkt.

9. Federbeinstützlageranordnung nach Anspruch 1,
**dadurch gekennzeichnet, dass** die mindestens zwei Stempel (9a, 9b) zur Erhöhung der Steifigkeit des Domlagers (1) den Stellring (10) mit dem Elastomerring (2) koppeln.

10. Federbeinstützlageranordnung nach Anspruch 1,
**dadurch gekennzeichnet, dass** die mindestens zwei Stempel (9a, 9b) zur Senkung der Steifigkeit des Domlagers (1) zumindest teilweise in einer jeweiligen dafür vorgesehenen Aussparung (17a, 17b) am Stellring (10) angeordnet sind.

## Claims

1. Suspension strut mount arrangement for a motor vehicle, comprising an adjustable strut bearing (1) with an elastomer ring (2), the adjustable strut bearing (1) being arranged firstly axially via a suspension strut mount (3) on a chassis spring (4) of a suspension strut (5), and secondly coming into contact via a base ring (6) at least indirectly with a vehicle body (7) of the motor vehicle, in order to connect the suspension strut (5) to the vehicle body (7) in a damping manner, **characterized in that** the base ring (6) has at least two axial cut-outs (8) for guiding a respective plunger (9a, 9b), the at least two plungers (9a, 9b) coming into contact axially between the elastomer ring (2) and an adjusting ring (10) in order to change the stiffness of the strut bearing (1).

2. Suspension strut mount arrangement according to Claim 1, **characterized in that** the adjusting ring (10) can be rotated at least indirectly via an actuator (11) which interacts with it in order to change the stiffness of the strut bearing (1).

3. Suspension strut mount arrangement according to Claim 1, **characterized in that** the at least two plungers (9a, 9b) have a respective ramp contour (12) on the end side towards the adjusting ring (10), which ramp contours (12), in the case of a rotation of the adjusting ring (10), interact with a respective ramp contour (13) on the adjusting ring (10), which ramp contour (13) is configured in a corresponding manner with respect to them.

4. Suspension strut mount arrangement according to Claim 1, **characterized in that** a piston rod (14) of the suspension strut (5) is connected to the base ring (6).

5. Suspension strut mount arrangement according to Claim 1, **characterized in that** the adjusting ring (10) is mounted such that it can be rotated axially on the vehicle body (7).

6. Suspension strut mount arrangement according to Claim 1, **characterized in that** the elastomer ring (2) has at least two low axial regions (15a) and at least two high axial regions (15b), the at least two low axial regions (15a) being provided to receive at least the respective plunger (9a, 9b), and the at least two high axial regions (15b) being provided to come into contact axially between the base ring (6) and the suspension strut mount (3).

7. Suspension strut mount arrangement according to Claim 2, **characterized in that** the actuator (11) can be controlled and regulated via a control element (16) which interacts with it.

8. Suspension strut mount arrangement according to Claim 1, **characterized in that** the actuator (11) interacts with the adjusting ring (10) via a gear apparatus (18).

9. Suspension strut mount arrangement according to Claim 1, **characterized in that** the at least two plungers (9a, 9b) couple the adjusting ring (10) to the elastomer ring (2) in order to increase the stiffness of the strut bearing (1).

10. Suspension strut mount arrangement according to Claim 1, **characterized in that**, in order to lower the stiffness of the strut bearing (1), the at least two plungers (9a, 9b) are arranged at least partially in a respective cut-out (17a, 17b) which is provided for this purpose on the adjusting ring (10).

## Revendications

1. Dispositif de palier de support de jambe de force pour un véhicule automobile, comprenant un palier de jambe de force réglable (1) avec un anneau élastomère (2), dans lequel le palier de jambe de force réglable (1) est d'une part disposé axialement par l'intermédiaire d'un palier de support de jambe de force (3) sur un ressort de châssis (4) d'une jambe de force (5) et vient d'autre part en appui par un anneau de base (6) au moins indirectement sur une carrosserie (7) du véhicule automobile, afin de relier la jambe de force (5) de façon amortie à la carrosserie (7),
**caractérisé en ce que** l'anneau de base (6) présente au moins deux découpes axiales (8) pour le guidage d'un poussoir respectif (9a, 9b), dans lequel lesdits au moins deux poussoirs (9a, 9b) viennent en appui axialement entre l'anneau élastomère (2) et un anneau de réglage (10) pour la variation de la raideur du palier de jambe de force (1).

2. Dispositif de palier de support de jambe de force selon la revendication 1, **caractérisé en ce que** l'anneau de réglage (10) peut tourner au moins indirectement au moyen d'un actionneur (11) coopérant avec lui pour la variation de la raideur du palier de jambe de force (1).

3. Dispositif de palier de support de jambe de force selon la revendication 1, **caractérisé en ce que** lesdits au moins deux poussoirs (9a, 9b) présentent côté frontal vers l'anneau de réglage (10) un contour de rampe respectif (12), qui lors d'une rotation de l'anneau de réglage (10) coopère avec un contour de rampe respectif (13) correspondant à celui-ci formé sur l'anneau de réglage (10).

4. Dispositif de palier de support de jambe de force selon la revendication 1, **caractérisé en ce qu'**une tige de piston (14) de la jambe de force (5) est reliée à l'anneau de base (6).

5. Dispositif de palier de support de jambe de force selon la revendication 1, **caractérisé en ce que** l'anneau de réglage (10) est monté de façon rotative axialement sur la carrosserie (7).

6. Dispositif de palier de support de jambe de force selon la revendication 1, **caractérisé en ce que** l'anneau élastomère (2) présente au moins deux régions axiales basses (15a) ainsi qu'au moins deux régions axiales hautes (15b), dans lequel lesdites au moins deux régions axiales basses (15a) sont prévues pour recevoir au moins le poussoir respectif (9a, 9b), et dans lequel lesdites au moins deux régions axiales hautes (15b) sont prévues pour venir en appui axialement entre l'anneau de base (6) et le palier de support de jambe de force (3).

7. Dispositif de palier de support de jambe de force selon la revendication 2, **caractérisé en ce que** l'actionneur (11) peut être commandé et régulé par un élément de commande (16) qui coopère avec lui.

8. Dispositif de palier de support de jambe de force selon la revendication 1, **caractérisé en ce que** l'actionneur (11) coopère avec l'anneau de réglage (10) au moyen d'un dispositif de transmission (18).

9. Dispositif de palier de support de jambe de force selon la revendication 1, **caractérisé en ce que** lesdits au moins deux poussoirs (9a, 9b) couplent l'anneau de réglage (10) à l'anneau élastomère (2) pour augmenter la raideur du palier de jambe de force (1).

10. Dispositif de palier de support de jambe de force selon la revendication 1, **caractérisé en ce que** lesdits au moins deux poussoirs (9a, 9b) sont disposés au moins en partie dans une découpe respective (17a, 17b) prévue à cet effet sur l'anneau de réglage (10) pour diminuer la raideur du palier de jambe de force (1).
